# EUROPÄISCHE PATENTSCHRIFT

(11) **EP 1 036 100 B1**
(45) Veröffentlichungstag und Bekanntmachung des Hinweises auf die Patenterteilung: **03.04.2002**
(21) Anmeldenummer: 98965218.5
(22) Anmeldetag: 01.12.1998
(51) Int. Cl.: C08F 210/02, C10L 1/18

(54) **VERFAHREN ZUR HERSTELLUNG VON ETHYLENCOPOLYMEREN IN SEGMENTIERTEN ROHRREAKTOREN UND VERWENDUNG DER COPOLYMERE ALS FLIESSVERBESSERER**
METHOD FOR PRODUCING ETHYLENE COPOLYMERS IN SEGMENTED TUBULAR REACTORS AND UTILIZING COPOLYMERS AS A FLOW IMPROVER
PROCEDE POUR PRODUIRE DES COPOLYMERES D'ETHYLENE DANS DES REACTEURS TUBULAIRES SEGMENTES ET UTILISATION DE CES COPOLYMERES COMME AMELIORATEURS D'ECOULEMENT

(30) Priorität: 05.12.1997 DE 19754039
(43) Veröffentlichungstag der Anmeldung: 20.09.2000
(73) Patentinhaber: BASF AKTIENGESELLSCHAFT, 67056 Ludwigshafen (DE)
(72) Erfinder: DECKERS, Andreas, D-55234 Flomborn (DE); WENDEROTH, Bernd, D-68623 Lampertheim (DE); WEDEL, Peter, D-67549 Worms (DE); WEBER, Wilhelm, D-67435 Neustadt (DE)
(74) Vertreter: Isenbruck, Günter, Dr.
(86) Internationale Anmeldenummer: EP9807793
(87) Internationale Veröffentlichungsnummer: WO9929748

(56) Entgegenhaltungen:
- EP-A- 0 007 590
- EP-A- 0 475 124
- DE-A- 2 403 516
- DE-A- 3 141 507

## Beschreibung

Die Erfindung betrifft Ethylen/Vinylacetat-Copolymere, ein Verfahren zu ihrer Herstellung, die Verwendung der Copolymere als Fließverbesserer, insbesondere in Erdölmitteldestillaten wie Dieselkraftstoffen und leichten Heizölen, sowie diese umfassende Brenn- und Treibstoffzusammensetzungen.

Ethylen/Vinylacetat-Copolymere werden seit einiger Zeit als Fließverbesserer in Erdöl-Mitteldestillaten eingesetzt. Sie dienen dabei insbesondere zur Erniedrigung des "Cold Filter Plugging Point" (CFPP), der nach EN 116 bestimmt wird. Die Herstellung der Ethylen/Vinylacetat-Copolymere erfolgt in der Regel durch Polymerisation der Monomere im Hochdruckverfahren.

In der US 3,627,838 ist ein Verfahren zur Herstellung von Stockpunktverbesserern beschrieben. Hierzu werden Ethylen/Vinylacetat-Copolymere eingesetzt. Die Umsetzung von Ethylen und Vinylacetat erfolgt in einem Reaktor bei einer Temperatur im Bereich von 138 bis 171°C und einem Druck von 48 bis 137 bar.

In der DE-A 25 15 805 sind Ethylencopolymere, Verfahren zu deren Herstellung und diese enthaltende Destillatöle beschrieben. Die Umsetzung von Ethylen und Vinylacetat erfolgt in einem Autoklaven in Cyclohexan als Lösungsmittel. Die Temperatur bei der Umsetzung beträgt etwa 105°C und der Druck etwa 75 kp/cm².

In der DE-A-31 41 507 wird ein radikalisches Polymerisations verfahren zur Herstellung von Ethylen-Copolymeren in einem Zweizonen Rohrreaktor beschrieben. Es wird an der Einlaßstelle und zusätzlich an zwei weiteren Stellen Initiator zudosiert.

In der EP-A-0 007 590 sind Mitteldestillate des Erdöls mit verbesserter Filtrierbarkeit beschrieben. Die Erdöldestillate enthalten beispielsweise Ethylen/Vinylacetat-Copolymere, die ohne Lösungsmittel bei Drücken von 500 bis 2000 bar und Temperaturen von 100 bis 350°C aus den Monomeren hergestellt werden. Die Polymere werden zusammen mit Monomeren wie Vinylacetat als Fließverbesserer eingesetzt.

Bei der technischen Herstellung der Copolymere hat sich insbesondere die Verwendung gerührter Autoklaven durchgesetzt. Die Verwendung von nicht rückvermischten Rohrreaktoren führt in der Regel zu heterogeneren Produkten, da entlang des Rohrreaktors größere Temperatursprünge im Anschluß an die Initiatordosierungen mehrfach durchfahren werden. Die erhaltenen Copolymere weisen in der Regel eine breite Molekulargewichtsverteilung auf.

Aufgabe der vorliegenden Erfindung ist die Bereitstellung eines Verfahrens zur Herstellung von Ethylen und Vinylacetat-Copolymeren, das zu Copolymeren mit einer engen Molekulargewichtsverteilung führt, die vorteilhaft als Fließverbesserer in Erdöl-Mitteldestillaten eingesetzt werden können.

Die Aufgabe wird erfindungsgemäß gelöst durch Bereitstellen eines Verfahrens zur Herstellung von Ethylen/Vinylacetat-Copolymeren, bei dem ein Gemisch aus Ethylen und Vinylacetat in Gegenwart von radikalischen Polymerisationsinitiatoren und gegebenenfalls Molekulargewichtsreglem in einem gekühlten Rohrreaktor bei einem Druck in einem Bereich von 1000 bis 3500 bar, vorzugsweise 1200 bar kontinuierlich polymerisiert wird, wobei der Polymerisationsinitiator zu Beginn und an mehreren Stellen entlang des Rohrreaktors zudosiert wird und Temperaturänderungen im Reaktionsgemisch entlang des Rohrreaktors zwischen dem ersten Temperaturmaximum und der letzten Zudosierung des Polymerisationsinitiators in einem Bereich von maximal 20°C liegen.

Es wurde gefunden, daß Ethylen/Vinylacetat-Copolymere mit vorteilhaften Eigenschaften, insbesondere engen Molekulargewichtsverteilungen, zugänglich sind, wenn im Rohrreaktor die Temperatur des Reaktionsgemisches in einem möglichst engen Bereich gehalten wird.

Die Reaktionsführung sollte somit möglichst homogen entlang des Rohrreaktors erfolgen. Üblicherweise wird ein Monomerengemisch aus Ethylen und Vinylacetat vor dem Rohrreaktor mit einem Polymerisationsinitiator und gegebenenfalls einem Molekulargewichtsregler versetzt und im Rohrreaktor polymerisiert. Dabei steigt beim Reaktionsbeginn die Temperatur zunächst an, um sodann aufgrund der Kühlung des Rohrreaktors abzufallen. In der Regel wird an mehreren Stellen entlang des Rohrreaktors weiterer Polymerisationsinitiator zugeführt, um zu möglichst hohen Umsätzen im Rohrreaktor zu gelangen. Nach jeder Zudosierung des Polymerisationsinitiators steigt die Temperatur zunächst wieder an, um sodann durch die Kühlung abzufallen. Es wurde gefunden, daß durch eine schnelle Folge von Initiatordosierungen mit anschließenden kurzen Abkühlzonen entlang des Rohrreaktors eine homogene Reaktionsführung, d.h. geringe Temperaturdifferenzen möglich sind, wodurch ein Copolymer mit einer engen Molekulargewichtsverteilung erhalten wird.

Vorzugsweise werden die jeweilige Menge des Polymerisationsinitiators und die Stellen der Zudosierung des Initiators entlang des Rohrreaktors bei gegebener Kühlung so gewählt, daß zwischen dem ersten Temperaturmaximum und der letzten Zudosierung des Polymerisationsinitiators die mittlere Maximaltemperatur im Reaktionsgemisch maximal 15°C, besonders bevorzugt maximal 10°C oberhalb der mittleren Minimaltemperatur liegt.

Vor dem ersten Aufheizen weist das Reaktionsgemisch eine niedrige Temperatur auf, die beim Vermischen der Monomere vorliegt. Nach der letzten Zudosierung des Polymerisationsinitiators wird das Reaktionsgemisch abgekühlt, um das Produkt aus dem Reaktor austragen zu können. Somit wird erfindungsgemäß zwischen dem ersten Aufheizen, d.h. dem ersten Erreichen der Maximaltemperatur, und dem endgültigen Abkühlen des Reaktionsgemisches das Temperaturniveau im Reaktionsgemisch möglichst konstant gelassen.

Vorzugsweise liegt die mittlere Maximaltemperatur des Reaktionsgemisches im Bereich von 230 bis 250°C, besonders bevorzugt 235 bis 245°C. Insbesondere beträgt die mittlere Maximaltemperatur etwa 240°C. Die mittlere Minimaltemperatur beträgt vorzugsweise etwa 230°C.

Besonders bevorzugt steigt die Innentemperatur im Rohrreaktor nach der Initiierung zu Beginn des Reaktors auf eine Temperatur von etwa 240 +/- 5°C. Sodann kühlt sich das Reaktionsgemisch durch die Abkühlung des Rohrreaktors (vorzugsweise mittels Wasserkühlung) auf eine Temperatur von etwa 230°C +/- 5°C ab. Darauf folgt eine erneute Initiierung in einer solchen Menge, daß die Temperatur des Reaktionsgemisches auf etwa 240°C +/- 5°C steigt. Je nach Reaktorlänge wiederholt man diesen Vorgang mehrfach, um zu einem hohen Umsatz zu gelangen.

Je nach gewünschtem Umsatz kann die Zahl der Stellen entlang des Rohrreaktors, an denen Polymerisationsinitiator zudosiert wird, variiert werden. Vorzugsweise wird entlang des Rohrreaktors an 2 bis 6, besonders bevorzugt an 3 bis 5 Stellen Polymerisationsinitiator zudosiert.

Der Druck im Rohrreaktor beträgt 1000 bis 3500 bar, vorzugsweise 1200 bis 2500 bar.

Das Verhältnis von Länge zu Durchmesser des Rohrreaktors liegt vorzugsweise im Bereich von 10 000 bis 50 000, besonders bevorzugt 15 000 bis 30 000.

Der Anteil an Vinylacetat im Reaktionsgemisch beträgt vorzugsweise 15 bis 45 Gew.-%, besonders bevorzugt 20 bis 35 Gew.-%. Dabei wird der Rest des Reaktionsgemisches von Ethylen gebildet. Das Copolymer ist somit vorzugsweise - abgesehen von Resten eines Radikalbildners oder Molekulargewichtsreglers - aus Ethylen und Vinylacetat aufgebaut.

Als radikalische Polymerisationsinitiatoren können beliebige Radikalbildner eingesetzt werden. Es können radikalisch zerfallende, vorzugsweise organische Peroxide, Luft oder Sauerstoff eingesetzt werden.

Beispiele geeigneter Radikalbildner sind organische Peroxide, wie Perester, Perketale und Percarbonate. Insbesondere werden tert.-Butylperpivalate und/oder tert.-Butylperisononanoat eingesetzt. Letztere können in einem molaren Verhältnis von 10 : 1 bis 1 : 10, vorzugsweise 5 : 1 bis 1 : 5, insbesondere etwa 1 : 1 eingesetzt werden.

Die Menge des eingesetzten radikalischen Polymerisationsinitiators beträgt vorzugsweise 10 bis 1000 mol-ppm, besonders bevorzugt 20 bis 100 mol-ppm.

Als Molekulargewichtsregler können beliebige geeignete Molekulargewichtsregler eingesetzt werden, wie aliphatische und olefinische Kohlenwasserstoffe, aliphatische Aldehyde u.s.w. Besonders bevorzugt werden aliphatische Aldehyde, insbesondere Propionaldehyd eingesetzt. Der Molekulargewichtsregler wird vorzugsweise dem Reaktionsgemisch vor dem Rohrreaktor zudosiert. Er kann auch zusammen mit dem Polymerisationsinitiator an den unterschiedlichen Stellen entlang des Rohrreaktors zudosiert werden.

Die erfindungsgemäß erhaltenen Ethylen/Vinylacetat-Copolymere weisen vorzugsweise ein Verhältnis Q von Gewichtsmittel des Molekulargewichts (M_{w}) zu Zahlenmittel des Molekulargewichts (Mₙ) von 2,0 bis 2,5 auf. Nach bekannten Verfahren hergestellte Copolymere weisen in der Regel einen Q-Wert von mehr als 2,6 auf. Die Schmelzviskosität der erfindungsgemäßen Copolymere beträgt vorzugsweise 40 bis 95 mm²s⁻¹, besonders bevorzugt 60 bis 80 mm²s⁻¹. Die Schmelzviskosität wird damit mittels Rotationsviskosimeter nach DIN 53019 bei 120°C bestimmt. Die Q-Werte werden mittels Gelpermationschromatographie bestimmt.

Bei den bekannten Copolymeren beträgt die Schmelzviskosität mehr als 100 cst bei 120°C. Bislang bekannte Produkte mit geringeren Schmelzviskositäten sind entweder schlechter löslich oder weniger wirksam.

Die Reaktionszeit in dem erfindungsgemäßen Verfahren beträgt vorzugsweise 60 bis 240 s, besonders bevorzugt 60 bis 90 s.

Die erfindungsgemäßen Copolymere sind sehr wirksame Fließverbesserer für Erdöldestillate, insbesondere Erdöl-Mitteldestillate, vorzugsweise Brenn- und Treibstoffzusammensetzungen. Sie bewirken dabei insbesondere eine deutliche Verminderung des "Cold Filter Plugging Point" (CFPP) nach EN 116. Zudem liegen die Trübungspunkte beziehungsweise Temperaturen, bei denen eine Trübung eines additivierten Brenn- oder Treibstoffs einsetzt, bei wesentlich niedrigeren Temperaturen als bei nicht additivierten Brenn- und Treibstoffen.

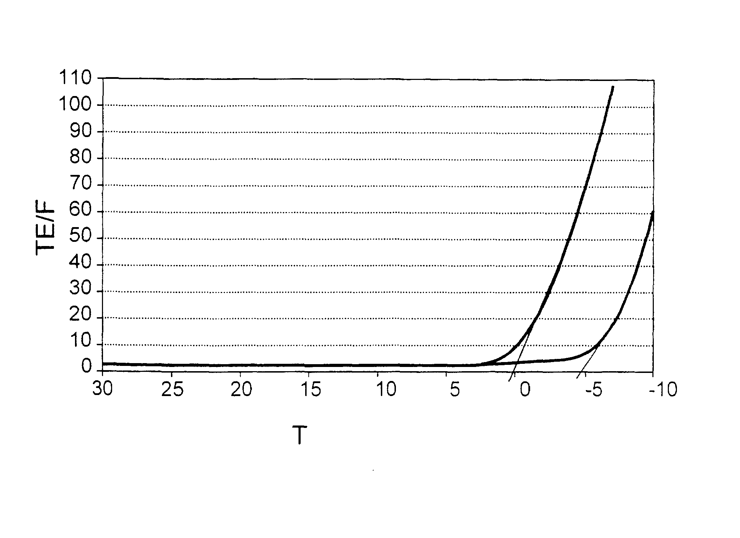

In Fig. 1 sind vergleichende Trübungsmessungen für erfindungsgemäße Polymere und Vergleichspolymere dargestellt. Dabei ist die Trübung in Trübungseinheiten TE/F gegen die Temperatur T (in °C) aufgetragen.

Die Erfindung betrifft auch eine Brenn- und Treibstoffzusammensetzung, die eine Hauptmenge eines Brenn- und Treibstoffs und eine zur Verbesserung der Fließeigenschaften wirksame Menge eines wie vorstehend beschriebenen Copolymers umfaßt. Vorzugsweise beträgt dabei der Anteil des Copolymers 0,01 bis 5 Gew.-%, besonders bevorzugt 0,01 bis 0,2 Gew.-%, insbesondere 0,01 bis 0,1 Gew.-%, bezogen auf die Brenn- und Treibstoffzusammensetzung. Als Brenn- und Treibstoffzusammensetzungen kommen insbesondere Mitteldestillate wie Dieselkraftstoffe und leichte Heizöle in Betracht. Die Erfindung wird nachstehend anhand von Beispielen näher erläutert.

### Beispiele

Herstellung der Ethylen/Vinylacetat-Copolymere

Die Copolymerisation von Ethylen und Vinylacetat wurde in einem kontinuierlich betriebenen Rohrreaktor mit einer Länge von 500 mm und einem Innendurchmesser von 40 mm durchgeführt. Dabei betrug der Reaktionsdruck konstant 1500 bar. Beispiel EVA1 betrug der Anteil an Vinylacetat 23 Gew.-%, in EVA2 26 Gew.-%, in EVA3 30 Gew.-%, in EVA4 33 Gew.-% und im Vergleichsbeispiel V1 30 Gew.-%. Die restliche Menge entfiel auf Ethylen. Als Radikalbildner wurde ein Gemisch aus tert.-Butylperpivalat (TBPP) und tert.-Butylperisononanoat (TBPIN) im Molverhältnis 1 : 1, gelöst in Isododecan, verwendet. Die Menge an Initiator betrug 50 mol-ppm. Der Inititator wurde dabei zu gleichen Anteilen vor dem Reaktor und an drei Stellen im Verlauf des Rohrreaktors zudosiert. Als Molekulargewichtsregler wurde Propionaldehyd verwendet, der dem ursprünglichen Reaktionsgemisch in einer Menge von 0,8 % zudosiert wurde.

Die Temperatur im Rohrreaktor wurde mittels eines verschiebbaren Thermometers gemessen. In der nachstehenden Tabelle 1 sind für die 5 untersuchten Produkte die Starttemperatur vor dem Rohrreaktor und die im Verlauf des Rohrreaktors gemessenen Maximal- und Minimaltemperaturen angegeben. Bei den Produkten EVA1 bis EVA4 erfolgte die zusätzliche Initiatordosierung an drei gleichbleibenden Stellen im Rohrreaktor. Für das Vergleichsbeispiel V1 wurde nur an 2 weiteren Stellen im Reaktor zusätzlich initiert, da die Reaktorlänge benötigt wurde, um in den verlängerten Abkühlzonen eine hinreichende Erniedrigung der Temperatur zu erreichen. Zusätzlich sind in Tabelle 1 der Anteil an Vinylacetat (Vac), die Viskosität (Visk) des Produkts in cst und der Q-Wert angegeben.

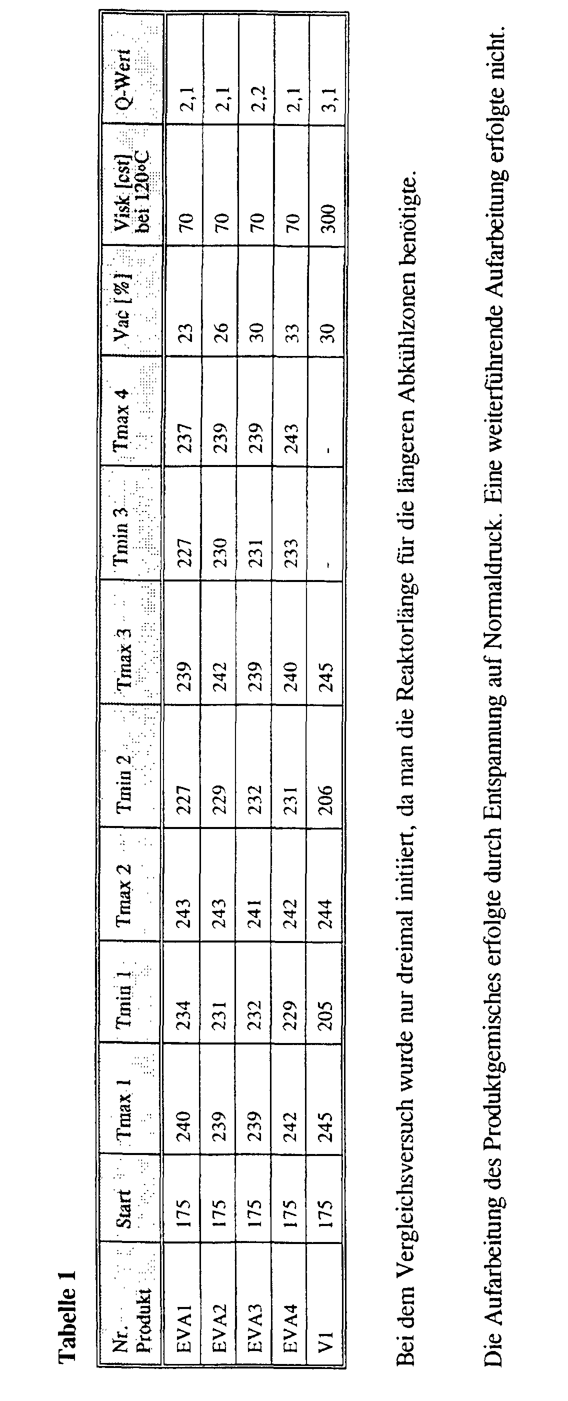

### Brenn- und Treibstoffzusammensetzungen

Die erfindungsgemäßen Copolymere wurden in einer Reihe von Brenn- und Treibstoffzusammensetzungen geprüft, die Erdöl-Mitteldestillate handelsüblicher europäischer Raffineriequalität waren. Sie wiesen die in der nachstehenden Tabelle 2 angegebenen Eigenschaften auf:

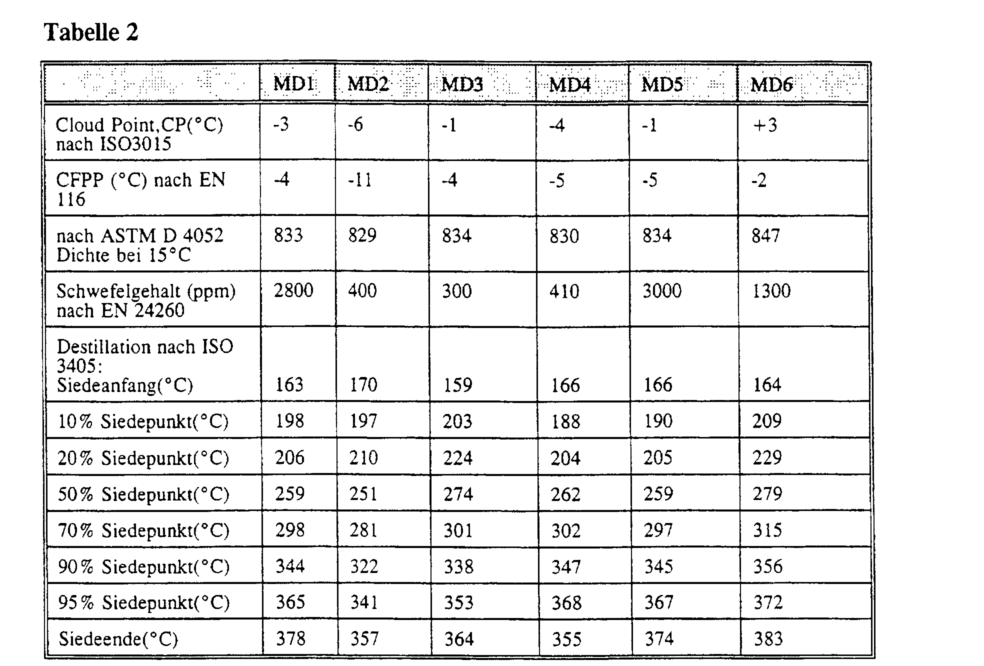

Der 10%-Siedepunkt ist die Temperatur, bei der 10 Vol-% des Ausgangsgemisches abdestilliert sind. Für die weiteren Angaben gilt Entsprechendes.

Die vorstehenden Erdöl-Destillate wurden mit den vorstehend erhaltenen Ethylen/Vinylacetat-Copolymeren EVA1 bis EVA4 versetzt, die in 50%iger Lösung im Lösungsmittel Solvent Naphtha schwer vorlagen. Zu Vergleichszwecken wurde das gemäß Vergleichsbeispiel V1 erhaltene Ethylen/Vinylacetat-Copolymer eingesetzt, das einem handelsüblichen Copolymer gemäß EP-A-0 007 590 entsprach und ebenfalls 50%ig in Solvent Naphtha schwer vorlag.

Die Mitteldestillate wurden mit den Copolymeren bei einer Temperatur von 40°C unter Rühren vermischt und anschließend auf Raumtemperatur abgekühlt. Die Menge des eingesetzten Additives ist in der nachstehenden Tabelle 3 angegeben. Zudem ist der jeweils nach EN 116 bestimmte "Cold Filter Plugging Point" (CFPP) angegeben. Ergebnisse für weitere Mitteldestillate sind in Tabelle 4 aufgeführt.

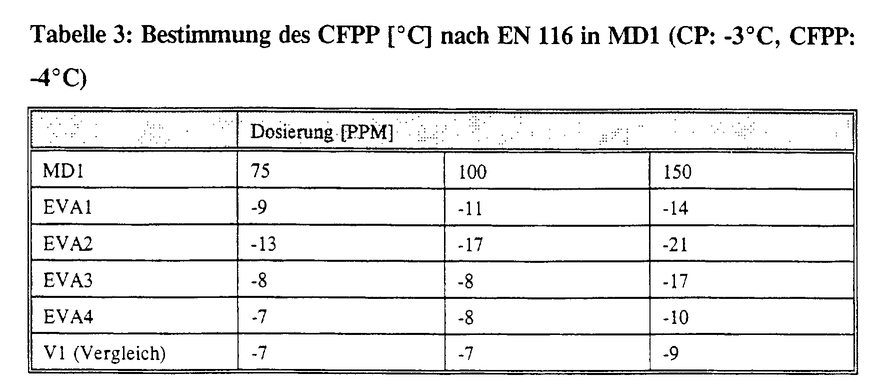

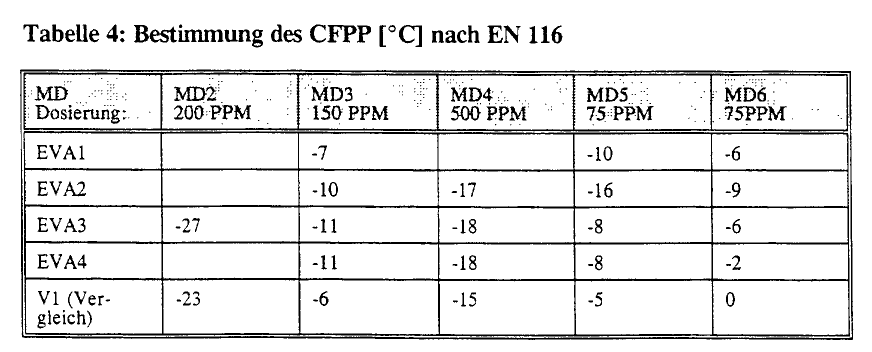

Aus den Ergebnissen aus den Tabellen 3 und 4 geht hervor, daß die mit den erfindungsgemäßen Copolymeren additivierten Mitteldestillate ein besseres CFPP-Ansprechverhalten zeigen als die mit dem Vergleichsadditiv versetzten Mitteldestillate.

### Trübungsmessungen

Trübungsmessungen wurden unter Verwendung eines Labor-Trübungs-Photometers vom Typ LTP 5 der Dr. Lange GmbH/Düsseldorf durchgeführt. Das Gerät mißt die Trübung nach dem 90°-Streulicht-Zweistrahlverfahren. Das von der Flüssigkeit diffus nach allen Seiten abgelenkte Streulicht wird unter einem Winkel von 90° gemessen. Die Trübungsmessung nach dem Streulicht-Verfahren ist unmittelbar linear zur Teilchenkonzentration und wird in Trübungseinheiten TE/F angezeigt.

Für die durchzuführenden Messungen wurde anstelle der ursprünglich vorhandenen Küvette eine temperierbare Meßzelle verwendet, bei der der Küvetteninhalt mit Hilfe eines darin angebrachten PT 100-Temperaturfühlers und externem Führungsregler FR 400, Programmgeber PD 420 sowie Thermostat UNISTAT der Huber GmbH/Offenburg programmiert mit einer Abkühlrate von 0,5°C/min abgekühlt werden kann.

Von den zu untersuchenden Proben wurden bei einer Temperatur von 50°C jeweils eine 1%ige Lösung in Xylol hergestellt. 15 ml dieser Lösung wurden bei 50°C in die temperierbare Küvette eingefüllt und auf 30°C abgekühlt. Anschließend wurde der Küvetteninhalt mit einer Abkühlrate von 0,5°C/min abgekühlt, und die Trübungseinheiten wurden in Abhängigkeit von der Temperatur aufgezeichnet. Das Ethylen/Vinylacetat-Copolymer EVA 3 und das Vergleichscopolymer V1, die beide einen Vinylacetat-Gehalt von 30 Gew.-% aufweisen, wurden vergleichend untersucht.

Die Ergebnisse sind in Fig. 1 aufgeführt. Wie Fig. 1 zu entnehmen ist, z eigt EVA3 ein gegenüber V1 der deutlich verbessertes Trübungsverhalten: Während bei V1 der Trübungspunkt bei 0°C liegt, konnte dieser mit EVA3 a uf -5°C abgesenkt werden, was in einem verbesserten Lösungsverhalten der erfindungsgemäßen Produkte resultiert.

Überraschenderweise wurde trotz der Absenkung des Trübungspunktes und der dadurch verringerten Zahl von auftretenden Kristallkeimen das oben bereits beschriebene deutlich verbesserte CFPP-Ansprechverhalten der erfindungsgemäßen Copolymere gefunden.

## Patentansprüche

1. Verfahren zur Herstellung von Ethylen/Vinylacetat-Copolymeren, bei dem ein Gemisch aus Ethylen und Vinylacetat in Gegenwart von radikalischen Polymerisationsinitiatoren und gegebenenfalls Molekulargewichtsreglern in einem gekühlten Rohrreaktor bei einem Druck im Bereich von 1000 bis 3500 bar kontinuierlich polymerisiert wird, **dadurch gekennzeichnet, daß** der Polymerisationsinitiator zu Beginn und an mehreren Stellen entlang des Rohrreaktors zudosiert wird und Temperaturänderungen im Reaktionsgemisch entlang des Rohrreaktors zwischen dem ersten Temperaturmaximum und der letzten Zudosierung des Polymerisationsinitiators in einem Bereich von maximal 20°C liegen.

2. Verfahren nach Anspruch 1, **dadurch gekennzeichnet, daß** die jeweilige Menge des Polymerisationsinitiators und die Stellen der Zudosierung entlang des Rohrreaktors bei gegebener Kühlung so gewählt werden, daß zwischen dem ersten Aufheizen und der letzten Zudosierung des Polymerisationsinitiators die mittlere Maximaltemperatur im Reaktionsgemisch maximal 15°C oberhalb der mittleren Minimaltemperatur liegt.

3. Verfahren nach Anspruch 2, **dadurch gekennzeichnet, daß** die mittlere Maximaltemperatur im Bereich von 230 bis 250°C liegt.

4. Verfahren nach Anspruch 2 oder 3, **dadurch gekennzeichnet, daß** die mittlere Maximaltemperatur 240°C und die mittlere Minimaltemperatur 230°C beträgt.

5. Verfahren nach einem der Ansprüche 1 bis 4, **dadurch gekennzeichnet, daß** entlang des Rohrreaktors an 2 bis 6 Stellen Polymerisationsinitiator zudosiert wird.

6. Verfahren nach einem der Ansprüche 1 bis 5, **dadurch gekennzeichnet, daß** das Verhältnis von Länge zu Innendurchmesser des Rohrreaktors im Bereich von 10 000 bis 50 000 liegt.

7. Ethylen/Vinylacetat-Copolymer, herstellbar nach einem Verfahren gemäß einem der Ansprüche 1 bis 6 mit einem Q-Wert im Bereich von 2,0 bis 2,5 und einer Schmelzviskasität bei 120°C im Bereich von 40 bis 95 mm²s⁻¹ nach DIN 53019.

8. Verwendung von Copolymeren nach Anspruch 7 als Fließverbesserer in Erdölmitteldestillaten.

9. Brenn- und Treibstoffzusammensetzung, umfassend eine Hauptmenge eines Brenn- und Treibstoffs und eine zur Verbesserung der Fließeigenschaften wirksame Menge eines Copolymers nach Anspruch 7.

## Claims

1. A process for preparing ethylene-vinyl acetate copolymers in which a mixture of ethylene and vinyl acetate is polymerized continuously in the presence of free-radical polymerization initiators and, if desired, molecular weight regulators in a cooled tube reactor at a pressure in the range from 1000 to 3500 bar, and where the polymerization initiator is added at the beginning and at two or more points along the tube reactor, and temperature changes in the reaction mixture along the tube reactor, between the first temperature maximum and the last addition of the polymerization initiator, are within a range of not more than 20°C.

2. A process as claimed in claim 1, wherein with a given level of cooling, the respective amount of the polymerization initiator and the sites of addition along the tube reactor are chosen so that the average maximum temperature in the reaction mixture is not more than 15°C above the average . minimum temperature between the first heating and the last addition of the polymerization initiator.

3. A process as claimed in claim 2, wherein the average maximum temperature is in the range from 230 to 250°C.

4. A process as claimed in claim 2 or 3, wherein the average maximum temperature is 240°C and the average minimum temperature is 230°C.

5. A process as claimed in any of claims 1 to 4, wherein polymerization initiator is added at from 2 to 6 sites along the tube reactor.

6. A process as claimed in any of claims 1 to 5, wherein the ratio of length to internal diameter of the tube reactor is in the range from 10,000 to 50,000.

7. An ethylene-vinyl acetate copolymer preparable by a process as claimed in any of claims 1 to 6 having a Q in the range from 2.0 to 2.5 and a melt viscosity at 120°C in the range from 40 to 95 mm²s⁻¹.

8. The use of a copolymer as claimed in claim 7 as a flow improver in petroleum middle distillates.

9. A fuel composition comprising a major amount of a fuel and an effectively flow-improving amount of a copolymer as claimed in claim 7.

## Revendications

1. Procédé de préparation de copolymères d'éthylène/acétate de vinyle, dans lequel un mélange d'éthylène et d'acétate de vinyle est polymérisé en continu, en présence d'initiateurs de polymérisation radicalaire et éventuellement de régulateurs de poids moléculaire, dans un réacteur tubulaire réfrigéré, à une pression de l'ordre de 1000 à 3500 bar, **caractérisé en ce que** l'initiateur de polymérisation est dosé au début et en plusieurs endroits le long du réacteur tubulaire, et que les variations de température dans le mélange réactionnel au long du réacteur tubulaire, entre le premier maximum de température et la dernière addition de l'initiateur de polymérisation, sont de l'ordre d'un maximum de 20°C.

2. Procédé selon la revendication 1, **caractérisé en ce que** les quantités respectives d'initiateur de polymérisation et les endroits d'introduction le long du réacteur tubulaire sont, à refroidissement donné, choisis de manière qu'entre le premier chauffage et la dernière addition d'initiateur de polymérisation, la température maximale moyenne du mélange réactionnel se situe à un maximum de 15°C au-dessus de la température minimale moyenne.

3. Procédé selon la revendication 2, **caractérisé en ce que** la température maximale moyenne est de l'ordre de 230 à 250°C.

4. Procédé selon la revendication 2 ou 3, **caractérisé en ce que** la température maximale moyenne est de 240°C et la température minimale moyenne est de 230°C.

5. Procédé selon l'une des revendications 1 à 4, **caractérisé en ce que** l'on introduit de l'initiateur de polymérisation en 2 à 6 points le long du réacteur tubulaire.

6. Procédé selon l'une des revendications 1 à 5, **caractérisé en ce que** le rapport de la longueur au diamètre intérieur du réacteur tubulaire est de l'ordre de 10 000 à 50 000.

7. Copolymère d'éthylène/acétate de vinyle, que l'on peut préparer par un procédé selon l'une des revendications 1 à 6, présentant une valeur Q de l'ordre de 2,0 à 2,5 et une viscosité à l'état fondu à 120°C de l'ordre de 40 à 95 mm²s⁻¹ selon DIN 53019.

8. Utilisation de copolymères selon la revendication 7 comme agents rhéologiques (améliorateurs d'écoulement) dans des distillats moyens de pétrole.

9. Composition de combustible et carburant, contenant une quantité principale d'un combustible et carburant et une quantité d'un copolymère selon la revendication 7 efficace pour améliorer les caractéristiques d'écoulement.
